## Europäisches Patentamt
## European Patent Office
## Office européen des brevets

(19)

(11) Publication number: **0 046 521**

A1

(12)

# EUROPEAN PATENT APPLICATION

(21) Application number: **81106056.5**

(22) Date of filing: **03.08.81**

(51) Int. Cl.³: **A 46 B 13/02**

(30) Priority: 25.08.80 IT 2427280
13.04.81 IT 2112381

(43) Date of publication of application:
03.03.82 Bulletin 82/9

(84) Designated Contracting States:
AT BE CH DE FR GB LI NL SE

(71) Applicant: **Lazzari, Giosuè Mario**
**Via degli Alpini, 18**
**I-24068 Seriate(IT)**

(72) Inventor: **Lazzari, Giosuè Mario**
**Via degli Alpini, 18**
**I-24068 Seriate(IT)**

(74) Representative: **Borella, Ada**
**Ing. A. Racheli & C. Viale San Michele del Carso, 4**
**I-20144 Milan(IT)**

(54) A powered rotating device for teeth cleaning.

(57) This invention relates to a powered rotating device for teeth cleaning, comprising a handgrip (15, 41, 51) having inserted therein a drive mechanism (12-13, 33-34, 54), a switch (23, 40, 62) operating said drive mechanism connected to ad least one power supply (42, 53) and at least one rotating tooth-brush (2-9, 11, 30) in case connected to transmission means. Different embodiments of said device are also disclosed. Particularly, a first embodiment is referred to as comprising a pair of cylindrical or frusto-conical tooth-brushes (4-5, 6-7, 8-9) rotating in opposite direction to one another, having parallel axes and the assemblies of bristles almost tangent to one another. On the other hand, a second embodiment provides a device comprising a single cylindrical tooth-brush (30), which is selectively clockwise or anti-clockwise made to rotate. This second embodiment is simple and handy and enables to provide a travelling device.

FIG.4

EP 0 046 521 A1

Applicant:

GIOSUE' MARIO LAZZARI

Via degli Alpini, 18

24068 - SERIATE (Bergamo) Italy

"A PROWERED ROTATING DEVICE FOR TEETH CLEANING".

This invention relates to a prowered roxating device for teeth cleaning, comprising a handgrip having a drive mechanism, inserted therein a switch operating said drive mechanism at least one tooth-brush carried on a shaft and in case transmission means for the rotary motion.

At present, devices are sold having a drive motor inserted in the handgrip, which moves the shaft carrying the tooth-brush alternately from bottom to top and from top to bottom. Therefore, it will be appreciated that the teeth, and accordingly the gums, are first rubbed in the direction from the gum to the tooth and then viceversa. This arises problems particularly where the subject already suffers from gum inflammations, as the gums are thus urged above the neck of the tooth, further predisposing the latter to decay.

Therefore, it is the object of the present invention to provide a powered device for teeth cleaning, in which the tooth-brush operates so that the gums are always rubbed in the direction from the gum to the tooth, avoiding any raising of said gum over the neck of the tooth, which is essential for the user's teeth safety.

It is a further object of the invention to provide a device allowing to replace a single handgrip with several implements, such as tooth-brushes depending on the user's or users needs with substantial family saving.

The above cited objects have been achieved by providing a device comprising at least one tooth-brush which is rotably driven by the drive mechanism inserted in the handgrip.

A particular embodiment of the present invention provides that the tooth-brush is protected by a cap having rounded walls. Thus, any possible damages to the oral cavity are avoided in case of user's careless.

Another embodiment of the present invention provides that said tooth-brush is supported on two sides of its axis of rotation.

A particular embodiment of the present invention provides that the brush or tooth-brush is a single brush and is selectively clockwise or anticlockwise rotated through a switch depending on the user's needs. By carefully using this implement and alternately using the clockwise or anticlockwise rotation, the gums are prevented from moving away from the natural location thereof relative to the neck of the tooth.

Another embodiment of the present invention provides that the tooth-brushes carried on the drive mechanism are two, having two parallel axes of rotation and rotate in opposite direction to each other.

A particular embodiment of the present invention provides a cylindrical case which engages with the handgrip of said device on both sides thereof. Thus, this implement may provide a useful adapter for a tooth-brush of reduced size, such as a travelling tooth-brush, and at the same time form a protective case which engages with the end of the device comprising the tooth-brush.

A further embodiment of the present invention provides that a transmission mechanism, along with its rotary driving means, is enclosed within the handgrip which is handled by the user during use.

A particular embodiment of the present invention provides that the transmission means comprises at least two intermeshing gears so that, for example, at least two tooth-brushes have a direction of rotation opposite to the other.

Another embodiment of the present invention provides that each single tooth-brush or pairs of tooth-brushes are interchangeable, whereby a plurality of implements can be used on the same drive mechanism with a substantial family saving.

Particularly, a solution provides that the rotary transmission means comprising, for example, a gear, is enclosed within the handgrip, while the various series of tooth-brushes can easily engage with said handgrip, so as to minimize the single cost for the various implements to be replaced on the single handgrip.

The invention will now be further described with reference to the accompanying drawings, showing some exemplary embodiments of the device according to the invention, and in which:

Fig. 1 is a longitudinal sectional view showing a first embodiment of the device having two small balls of coupled bristles and an electric driving motor in the handgrip;

Fig. 2 is a view showing a simpler implement comprising a single bristle ball with the axis of rotation perpendicular to the operating shaft;

Fig. 3 is an implement of the type shown in Fig. 2 having the bristle cylinder rotating with longitudinal axis;

Fig. 4 is a view showing an implement having two tangent cylindrical tooth-brushes, which are coaxially mounted on two operating shafts;

Fig. 5 is a view showing a type of dual implement, that is provided with two pairs of bristle balls, of which one is similar to that of Fig. 2 and the other is on the extension of the former;

Fig. 6 is a view showing an implement with a pair of tooth-brushes of frusto-conical shape;

Fig. 7 is a side view at 90° to that of Fig. 6, showing the advantage given by the frusto-conical shaped tooth-brushes, so as to provide a minor overall size for that portion of the apparatus which is to enter the mouth;

Fig. 8 is a perspective view showing the application of the implement with two tooth-brushes (Fig. 4 or 6) at the right side, outside and inside of the lower arch of the teeth;

Fig. 9 is a perspective view showing the application of the implement with two tooth-brushes of Fig. 4 or 6 at the two upper and lower outer half-arches of the left side;

Fig. 10 is a perspective view showing the application of the implement with two tooth-brushes of Figs. 4 or 6 at the inner upper and lower half-arches of the right side of the mouth;

Fig. 11 is a view showing another embodiment having only one tooth-brush and wherein the whole device is of reduced size, thus suitable for travelling prupose;

Figs. 12 and 13 are views of the embodiment shown in Fig. 11, wherein the device is provided with a cylindrical case for the tooth-brush, also acting as an adapter for the handgrip;

Fig. 14 shows another embodiment of the present invention allowing to insert various implements, for example including tooth-brushes, in a single handgrip; and

Figs. 15 and 16 show the device of Fig. 14 with the main parts cut away, which comprises also a particular switch shown at off and on position, respectively.

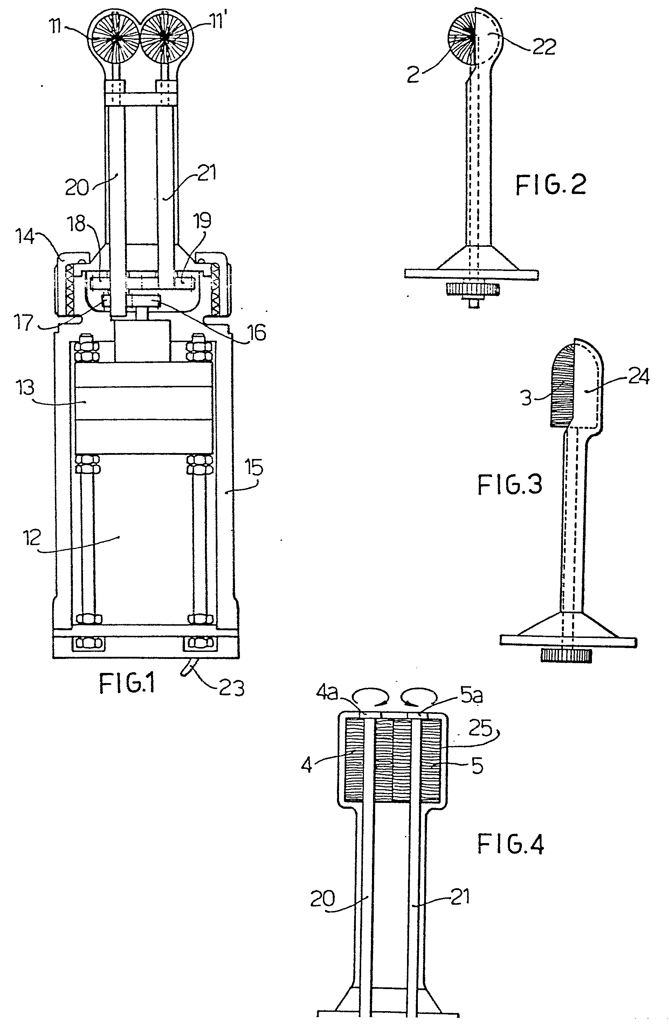

Fig. 1 shows a first embodiment of the present invention. This figure shows the motor 12, the speed variator 13, the threaded ring nut 14 to close the cylindrical box 15 forming the handgrip, in case being anatomically shaped to be more easily handled. Internally said handgrip accomodates the entire operating mechanism that is, in addition to the motor and in case the batteries for electrical operation thereof (not shown), the speed variator 13 and the transmission means, in this embodiment represented by the gears 16, 17, 18 and 19.

These gears are arranged so that the shafts 20 and 21 rotate in opposite direction to each other to facilitate the removal of food residuals from the teeth interstices, to rub the gums in the correct direction and urge the same toward the tooth, thus avoiding the deleterious action of the manual tooth-brushes or electric tooth-brushes vibrating from top to bottom and viceversa. Owing to the undue exerted energy, very often these tooth-brushes undermine the gums causing the latter to bleed and anyhow being prejudicial to the preservation of the natural protection of the tooth in its neck.

A switch 23 may be provided on the bottom of the handgrip to operate the motor. In Fig. 1 it will be seen that the device comprises two spherical tooth-brushes 11 and 11'; in Fig. 1 this device comprises a single spherical tooth-brush 2, which is suitably protected by a cap 22 and in Fig. 3 a cylindrical tooth-brush 3 is provided as protected by a cap 24. These caps have rounded walls in order to prevent possible damages to the oral cavity in case of user's careless and form a single unit with the shaft or shafts.

However, the device should preferably contain a pair of cylinders 4 and 5, as shown Fig. 4, in which the axis of rotation of the two cylinders is coaxial with that of the shafts.

Particularly, they can be supported at the ends 4a and 5a owing to the provision of cap 25, and at the ends 4b and 5b connected to the transmission, means thus allowing to provide a tooth-brush supported at the two ends of the axis of rotation.

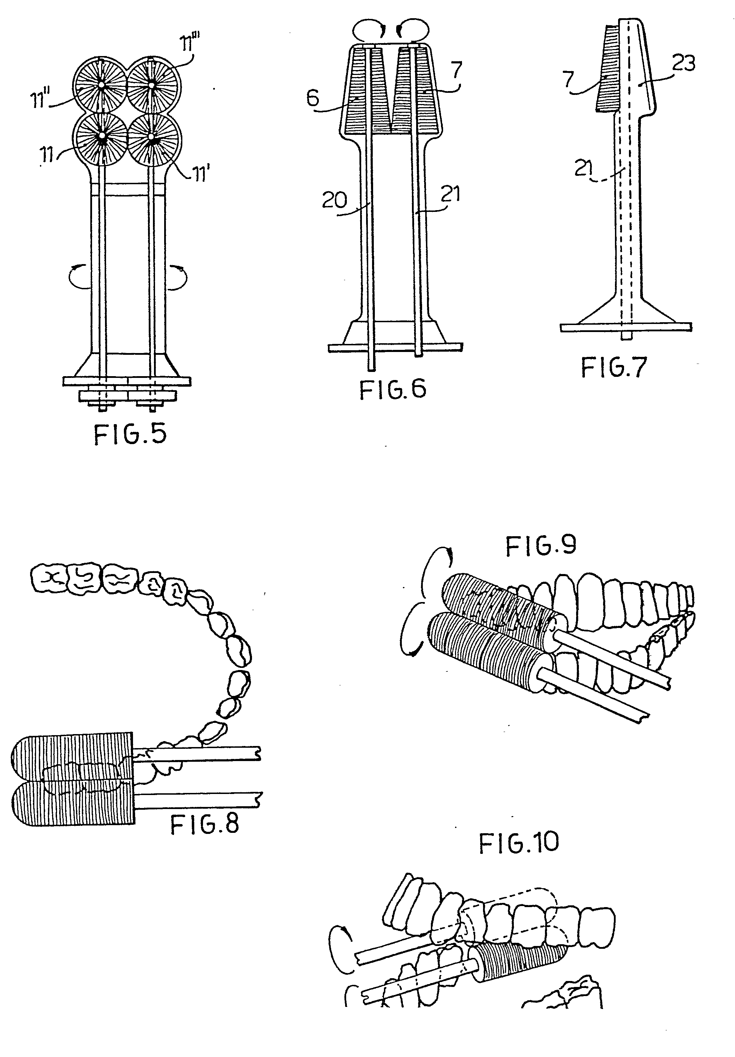

As shown in Figs. 6 and 7, the tooth-brushes 6 and 7 may be frusto-conical with the advantage of having a less overall size on the free ends first entering the mouth. Another variant to the implement may be shown in Fig. 5, illustrating two juxtaposed pairs of spherical tooth-brushes 11f 11' and 11", 11'". All of these embodiments have the axis of rotation comprising the shaft 20 and 21.

Where using two tooth-brushes, it is quite important that the envelopes of the bristles are nearly tangent to one another, so as to act always upon each row of teeth in the direction from the gum to the teeth.

The examples of use shown in Figs. 8, 9 and 10 are readily understandable and described in the same disclosure of the figures as to the action performed booth on the gums and on the teeth in the different parts of the mouth.

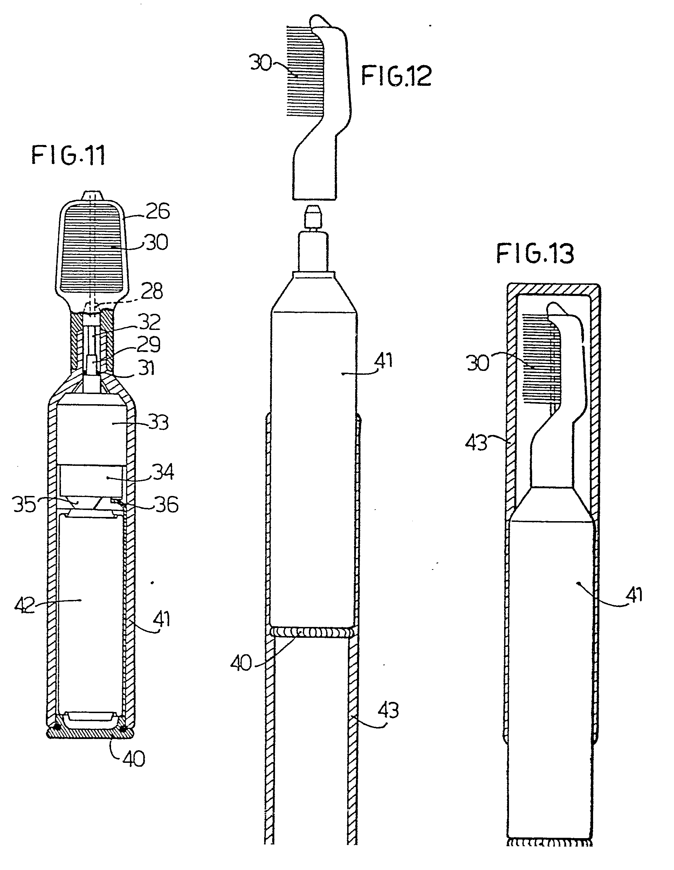

Another embodiment of the present invention is shown with reference to Figs. 11, 12 and 13. These figures show an exemplary embodiment of a travelling type of powered rotating tooth-brush, but of reduced size. The device comprises only one tooth-brush 30 of cylindrical or frusto-conical shape, which in case is protected by a cap 26 having rounded walls in order to damage the least as possible the interior of the user's mouth. The part 28 of the tooth-brush shaft engages with the part 29 of the shaft of the reduction gear by a connecting means 32. Thus, the tooth-brush can be substituted on the handgrip 41, which contains the entire drive mechanism. A seal 31 is also provided at the location where the two parts are interconnected. The part 29 of the shaft is connected to the geared motor 33, in turn operated by an electric motor 34. The motor 34 is actuated by a battery 42 causing the tooth-brush 30 to rotate.

As previously pointed out, it is important that the action exerted by the tooth-brush on the gums is always effected in the direction from the gum to the end of the tooth, and not conversely. In the above described embodiments comprising two or four tooth-brushes, this object is satisfactorily achieved. Where only one tooth-brush is provided, to attain said object it is instead important that this tooth-brush can rotate in clockwise or anticlockwise direction. Thus, it can be operated by the user depending on whether the part of the mouth to be cleaned is the lower or upper, right or left part. By mere way of example, it may be assumed that should the tooth-brush turn in one direction such that the user, by gripping it, can rub the top left row of teeth from top to bottom, the same direction of rotation can be used for cleaning the lower right row of teeth. Conversely, the opposite direction of rotation shall be used when having to clean the right upper and left lower part. In order to reach this object, a switch is provided which may selectively cause the tooth-brush to rotate in the two directions. In this embodiment, the switch comprises a rotable cover 40 which has the positive contact on the metal tongue 36 and the negative contact on the lower end of battery 42.

The tooth-brush is selectively operated in clockwise or anticlockwise direction by a rotation of cover 40 relative to the housing 41 forming the handgrip. Of course, when the tooth-brush is not operated, the cover is rotated so as not to touch the contacts simultaneously. This embodiment of the tooth-brush allows to provide a device which is simple, handy and of reduced size. However, an adapter thereof can be provided by a cylindrical case 43 which may be engaged with an end of the housing to extend the entire handgrip, thus simplifying the handling of the device, or at the other end providing a protective case for the tooth-brush when the latter has to be put back. Of course, this case 43 can be applied to the other embodiments of the other devices.

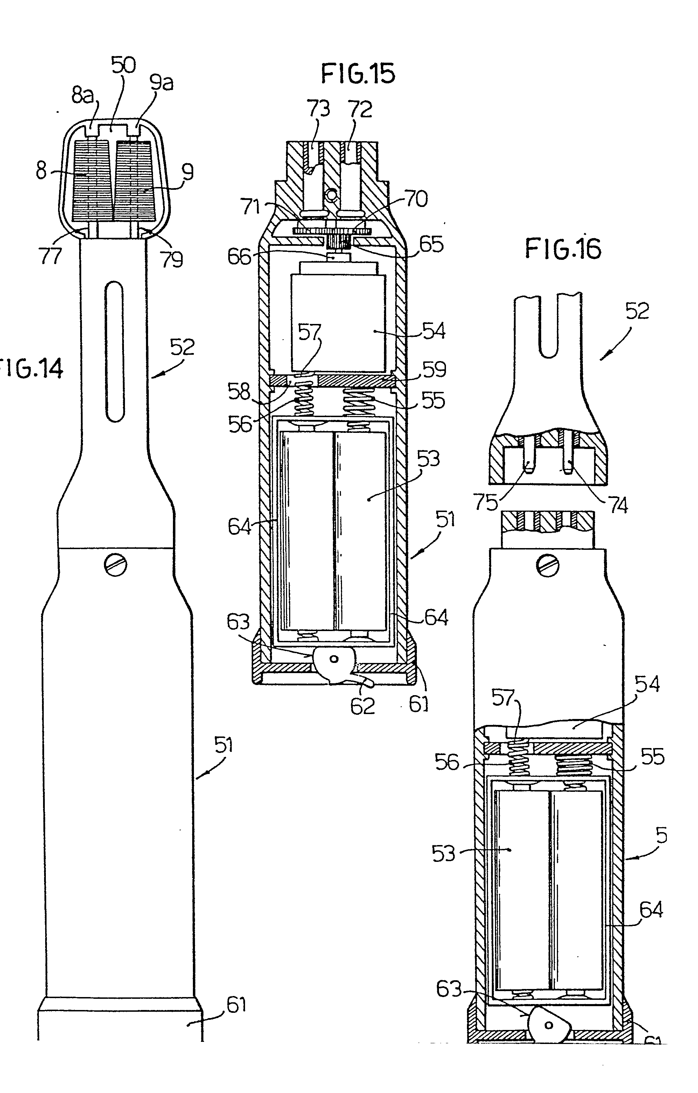

Another embodiment is shown in Figs. 14, 15 and 16. This device, as well as that shown in connection with Figs. 11, 12 and 13, allows to exchange the type of implement, comprising for example a single or dual tooth-brush. This affords to purchase a single handgrip with drive mechanism and separately a number of different implements, depending on the user's needs and with substantial family saving.

The selection of the interengaging means would depend on the manufacturer and in any case would involve simple mechanical solutions, however known to those skilled in the art. An embodiment will be described in the following.

In Fig. 14 a view is shown of a device having a handgrip 51, a housing 52 for the shafts which engages with the handgrip and two frusto-conical tooth-brushes 8 and 9 supported at one end 8a and 9a by a cap 50.

This cap 50, as well as the other caps, has rounded walls for the least damage as possible to the mouth interior.

Fig. 15 is a sectional view showing the handgrip of the device 51 comprising all of the most expensive elements enclosed therein, so as to render extremely economical the replaceable parts comprising the tooth-brushes 8 and 9 with the shafts thereof 77 and 79 protected by the cap 50. In the handgrip 51, at one end closed by a cover 61 and having a switch 62, provision is made for a housing 64 for the batteries 53 which through the spring contacts 55 and 56 operate the drive means 54.

The shaft 66 from the motor 54 is connected to a gear 65 in turn meshing with the gears 70 and 71, on which the parts 72 and 73 are inserted. In turn, said parts 72 and 73 have inserted therein the parts 74 and 75 which are contained in the housing 52 forming a relatively inexpensive element and which can then be produced in a plurality of units to be engaged with handgrip 51. Thus, the engaged parts 72 and 74 form the shaft 79 and the parts 73 and 75 form the shaft 77.

When the switch 62 is at the "closed" position shown in Fig. 15, the battery housing 64 has the spring 55, representing the negative grounded connection, still against the plate 59 of insulating material while, on the other hand, the spring 56 inserted in the hole 58 does not touch the motor contact 57.

When the switch 62 is at its "open" position, shown in Fig. 16, its eccentric part 63 lifts the housing 64 pushing the spring 56 against the contact 57 and accordingly operating the drive mechanism 54. By this simple system, without any auxiliary contacts, the shafts are rotably driven and make to rotate the tooth-brushes.

In the description of all the above embodiments the tramission means comprise gears or the like, but other transmission could be provided. In addition, only the tooth-brush operated by outside energy comprising electric power has been described, but in case an actuation by hydraulic power could be provided where running water at a sufficient pressure is available.

GIOSUE' MARIO LAZZARI

24068 SERIATE (Bergamo) Italy

C L A I M S

1.     A powered rotating device for teeth cleaning comprising a handgrip (15, 41, 51) in which the drive member (12-12, 33-34, 54) is inserted, a switch (23, 40, 62) operating said drive mechanism which is connected to ad least one power supply (42, 53) and a tooth-brush (2-9, 11, 30), characterized by comprising at least one tooth-brush (2-9, 11, 30) which is rotably driven by the drive mechanism.

2.     A device according to Claim 1, characterized by comprising a cap (22-26, 50) provided with rounded walls preventing possible damages to the oral cavity in case of user's careless.

3.     A device according to Claim 2, characterized in that the tooth-brush (2-9, 11, 30) is supported at two sides (4a, 4b, 5a, 5b, 8a, 9a) of its shafts (20, 21, 77, 79).

4.     A device according to Claim 1, characterized by comprising a tooth-brush (30) which is selectively rotated in clockwise or anti-clockwise direction.

5.      A device according to Claim 1, charactherized by comprising two tooth-brushes (6-9) having parallel shafts (20, 21, 77, 79) and direction of rotation opposite to each other.

6.      A device according to Claim 5, characterized in that the two tooth-brushes are rotated through at least one transmission means (16-19, 65, 70, 71).

7.      A device according to Claim 1, characterized by comprising a case (43) for engaging with the handgrip (15, 41) on both sides thereof.

8.      A device according to Claim 1, characterized in that the parts (28, 74, 75) of the shafts carrying the tooth-brushes (8-9, 30) engage with the corresponding parts (29, 72, 73) of the shafts connected to the drive mechanism (33, 34, 54), whereby different housings (52) of implements can be engaged on the same drive mechanism (12-13, 33-34, 54) contained in the handgrip (15, 41, 51).

9.      A device according to Claims 6 and 8, characterized in that the drive members (65, 70, 71) are contained in the handgrip (51).

10.     A device according to Claim 1, characterized in that the contacts of said power supply (53) with the drive mechanism (54) comprise springs (55, 56), one of which (56) touches a contact (57) of the motor (54) when the switch (62) is at "on"
position.

FIG.1

FIG.2

FIG.3

FIG.4

FIG.5

FIG.6

FIG.7

FIG.9

FIG.8

FIG.10

FIG·11

FIG.12

FIG.13

FIG.15

FIG.16

FIG.14

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 158 884 (MONTI-BUZZETTI) <br><br> * column 1, lines 10-18, 39-51, 55-68; column 2, lines 5-11; figures 1-5,7,8 * <br><br> -- | 1-3,8, 9 | A 46 B 13/02 |
| | US - A - 3 235 897 (FORTENBERRY) <br><br> * column 1, lines 7-10, 17-30, 33-38, 69-71; column 2, lines 1-30, 52-58, 62-71; column 3, lines 1-34, 49-75; column 4, lines 1-45, 48-75; column 5, lines 1-3; claims; figures * <br><br> -- | 1-4,8, 9 | |
| | US - A - 3 551 932 (GROSSMAN) <br><br> * column 1, lines 55-62; column 2, lines 9-72; column 3, lines 1-14, 19-27; claims; figures * <br><br> -- | 1-4,8, 9 | TECHNICAL FIELDS SEARCHED (Int. Cl.³) <br><br> A 46 B |
| | DE - U - 74 34 096 (MODERSOHN) <br><br> * the whole document * <br><br> -- | 1-4,8, 9 | |
| | US - A - 2 279 982 (GLYNN) <br><br> * page 1, right-hand column, lines 12-38; page 2, right-hand column, lines 6-42; page 3, left-hand column, lines 4-7; claims; figures * <br><br> -- <br><br> ./. | 1-4,8, 9 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| | The present search report has been drawn up for all claims | | |
| Place of search <br> The Hague | Date of completion of the search <br> 11-11-1981 | Examiner <br> BOURSEAU | |

0046521

European Patent
Office

EUROPEAN SEARCH REPORT

Application number

EP 81 10 605
-2-

| Category | Citation of document with indication, where appropriate, of relevant passages | Relevant to claim |
|---|---|---|

## DOCUMENTS CONSIDERED TO BE RELEVANT

**CLASSIFICATION OF THE APPLICATION (Int. Cl.³)**

FR - A - 1 478 409 (SOMI)

  * the whole document *

     --

1-4,8,9

EP - A - 0 015 183 (HAYAT)

  * page 2, lines 19-27, 32-35;
   figures 1-4 *

     --

1-4, 7-9

FR - A - 1 299 937 (PARVEX)

  * page 1, left-hand column,
   paragraphs 4,5, right-hand
   column, paragraphs 1,4,5,8;
   page 2, left-hand column, para-
   graphs 1,10,14, right-hand
   column, paragraphs 1-4,6; page
   3, left-hand column, para-
   graphs 3-13, right-hand column;
   figures *

     --

1-3,5, 6,8,9

**TECHNICAL FIELDS SEARCHED (Int. Cl.³)**

US - A - 2 583 886 (SCHLEGEL)

  * column 1, lines 1-22; claim;
   figures *

     --

1-3,5, 6,8,9

US - A - 2 655 675 (GROVER)

  * column 1, lines 41-60; column
   2, lines 1-17; claims; figures*

     --

1-3,5, 6,8,9

US - A - 2 562 805 (MARTINEZ)

  * column 1, lines 1-12, 30-55;
   column 2, lines 1-4; figures
   1-5 *    --    ./.

1-3,5, 6,8,9

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A - 2 542 378 (KAMM)<br><br>* the whole document *<br><br>-- | 1-3,5,<br>6,8,9 | |
| | US - A - 3 800 350 (FRANCOLINO)<br><br>* the whole document *<br><br>-- | 1-3,<br>5-9 | |
| | DE - C - 812 305 (OCHS)<br><br>* page 2, lines 99-103; claims 1,7 *<br><br>-- | 1,7 | TECHNICAL FIELDS SEARCHED (Int. Cl.³) |
| | CH - A - 401 905 (AMMANN)<br><br>* page 1, lines 40-42, 67-70; page 2, lines 1-28; figures *<br><br>---------- | 10 | |